# EUROPEAN PATENT APPLICATION

(11) **EP 2 926 926 A2**
(43) Date of publication of application: **07.10.2015**
(21) Application number: 15161695.0
(22) Date of filing: 30.03.2015
(51) Int. Cl.: B22F 3/105

(54) **THREE-DIMENSIONAL ADDITIVE MANUFACTURING DEVICE, THREE-DIMENSIONAL ADDITIVE MANUFACTURING SYSTEM, THREE-DIMENSIONAL ADDITIVE MANUFACTURING METHOD**

(30) Priority: 31.03.2014 JP 2014071222
(71) Applicant: JEOL Ltd., Akishima, Tokyo 196 (JP)
(72) Inventor: Manabe, Hironobu, Akishima, Tokyo 196-8558 (JP)
(74) Representative: Boult Wade Tennant

(57) **Abstract**

A three-dimensional additive manufacturing device which can construct a shaped object by using a plurality of types of metal powder, a three-dimensional additive manufacturing system, and a three-dimensional additive manufacturing method are provided.

A three-dimensional additive manufacturing device 100 includes a stage 4, a beam irradiation portion 8, a storage portion 42, a control portion 40, and a powder supply unit. The powder supply unit has a plurality of powder accommodating portions accommodating a plurality of types of metal powder and discharging the plurality of types of metal powder to the stage 4 and a holding mechanism for holding a plurality of powder accommodating portions and spreads the plurality of types of metal powder on the stage 4. The control portion 40 controls the powder supply unit so as to spread the plurality of types of metal powder on the stage 4 and controls the beam irradiation portion 8 so as to emit a charged particle beam with an output according to each metal powder on the basis of beam control data 64 read out of the storage portion 42.

## Description

### BACKGROUND OF THE INVENTION

### Field of the Invention:

The present invention relates to a three-dimensional additive manufacturing device which irradiates a plurality of types of powder sample made of metal powder with an electron beam, for example, to perform additive manufacturing, a three-dimensional additive manufacturing system, and a three-dimensional additive manufacturing method.

### Description of the Related Art:

An optical shaping device is widely known which shapes a three-dimensional object by irradiating a powder layer made of resin powder spread on a stage with a laser beam so as to melt the resin powder and by laminating layers in which the resin powder is solidified. In recent years, a three-dimensional additive manufacturing device is used which shapes a three-dimensional object by performing additive manufacturing of laminating layers in which the powder samples are molten and solidified by irradiating a specific region on a surface of the powder samples spread on the stage with an electron beam so as to process and alter the samples. As such a three-dimensional additive manufacturing device, an electron-beam drawing device, an electron-beam processing device, and a focused ion-beam device can be cited, for example.

Here, a flow of additive manufacturing process using a three-dimensional additive manufacturing device for performing additive manufacturing by an electron beam will be described.

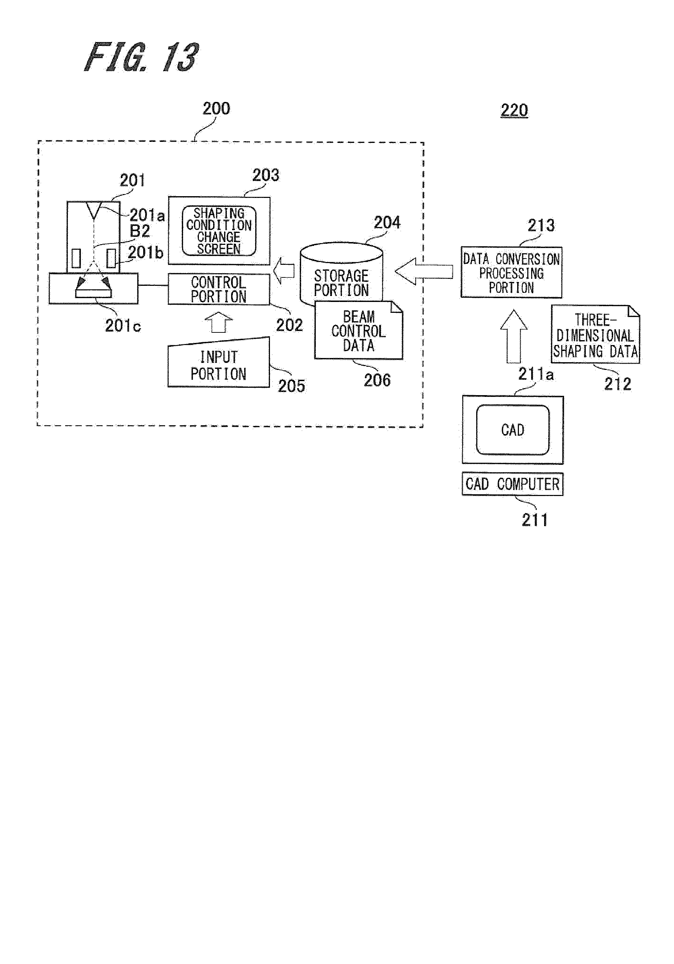

Fig. 13 illustrates a configuration example of a prior-art three-dimensional additive manufacturing system 220.

The prior-art three-dimensional additive manufacturing system 220 includes a three-dimensional additive manufacturing device 200, a CAD computer 211 on which a CAD (Computer Aided Design) is mounted, and a data conversion processing portion 213. The three-dimensional additive manufacturing device 200 includes an additive manufacturing portion 201, a control portion 202, a display portion 203, a storage portion 204, and an input portion 205.

The CAD computer 211 displays a shape of a shaped object designed by a user using the CAD on a display portion 211a and outputs three-dimensional shaping data 212 determining the shape of the shaped object to the data conversion processing portion 213. The data conversion processing portion 213 creates beam control data 206 specifying a scanning method of an electron beam B2 on the basis of laminate data obtained by slicing the three-dimensional shaping data 212 in a horizontal direction with a predetermined laminate thickness and makes it stored in the storage portion 204.

The control portion 202 displays a shaping condition change screen on the display portion 203. The shaping condition determines what beam current value is to be used for the electron beam B2 which shapes a profile portion, a portion not to be shaped (temporary sintered portion) and the like of a shape to be shaped by the additive manufacturing portion 201, for example. The user can manually determine and change the shaping condition by operating the input portion 205 while watching the shaping condition change screen. Setting or changing of the shaping condition can be made before start of shaping by the additive manufacturing portion 201 or during shaping.

Then, the additive manufacturing portion 201 performs additive manufacturing based on the beam control data 206 in accordance with the determined shaping condition. At this time, the additive manufacturing portion 201 deflects the electron beam B2 emitted from a beam emitting portion 201a by a lens 201b and scans powder samples spread on a z-axis stage 201c by the electron beam B2. Then, the additive manufacturing portion 201 repeatedly performs melting, solidifying, and laminating of the powder samples by scanning of the electron beam B2 so as to create a targeted shaped object.

As an example of such a three-dimensional additive manufacturing device, the one disclosed in Japanese Patent Laid-Open No. 2001-152204 (Patent Literature 1) is known. In this Patent Literature 1, a technology is disclosed which forms a cured layer by irradiating a powder material with a light beam and laminates this cured layer so as to manufacture a desired shaped object.

However, in the prior-art three-dimensional additive manufacturing device as disclosed in Patent Literature 1, such a method is employed that one type of metal powder is stored in a hopper, and the metal powder is spread on a shaped surface. Moreover, output control of the electron beam is also adapted to one type of metal. Therefore, with the prior-art three-dimensional additive manufacturing device, a shaped object cannot be constructed by using a plurality of types of metal powder made of metal powder.

The present invention was made in view of such circumstances and an object of the present invention is to provide a three-dimensional additive manufacturing device which can construct a shaped object by using a plurality of types of metal powder, a three-dimensional additive manufacturing system, and a three-dimensional additive manufacturing method.

### SUMMARY OF THE INVENTION

In order to achieve the above-described object, a three-dimensional additive manufacturing device of the present invention includes a stage, a powder supply unit, a beam irradiation portion, a storage portion, and a control portion. A plurality of types of metal powder for forming a shaped object is spread on the stage. The powder supply unit has a plurality of powder accommodating portions for accommodating a plurality of types of metal powder and discharging the plurality of types of metal powder on the stage and a holding mechanism for holding the plurality of powder accommodating portions and spreads the plurality of types of metal powder on the stage. The beam irradiation portion irradiates the plurality of types of metal powder spread on the stage with a charged particle beam. The storage portion stores beam control data storing a type of the metal powder and a coordinate position irradiated with the charged particle beam, for each specific region. The control portion controls the powder supply unit so as to spread the plurality of types of metal powder on the stage and controls the beam irradiation portion so as to emit the charged particle beam with an output according to each metal powder, on the basis of the beam control data read out from the storage portion.

A three-dimensional additive manufacturing system of the present invention includes the above-described three-dimensional additive manufacturing device, a metal powder specifying portion, and a data conversion processing portion. The metal powder specifying portion adds a type of metal powder to construct a desired spot in the shaped object to three-dimensional shaping data. The data conversion processing portion slices the three-dimensional shaping data and converts it to the beam control data in which the type of the metal powder and the coordinate position irradiated with the charged particle beam are stored for each specific region.

Moreover, a three-dimensional additive manufacturing method of the present invention includes a metal powder supply step and a beam emitting step. In the metal powder supply step, the control portion controls the powder supply unit so as to spread the plurality of types of metal powder on the stage on the basis of the beam control data in which the type of the metal powder and the coordinate position irradiated with the charged particle beam are stored for each specific region. In the beam emitting step, the control portion controls the beam irradiation potion so as to emit the charged particle beam with the output according to each metal powder on the basis of the beam control data.

In the three-dimensional additive manufacturing device, the three-dimensional additive manufacturing system, and the three-dimensional additive manufacturing method of the present invention, it is possible to scan the charged particle beam to melt each metal powder while changing an output condition of the charged particle beam in accordance with the type of the metal powder. As a result, the plurality of types of metal can be molten so as to construct a shaped object.

According to the present invention, the plurality of types of metal can be molten so as to construct a shaped object.

### BRIEF DESCRIPTION OF THE DRAWINGS

[Fig. 1] Fig. 1 is an explanatory view schematically illustrating a shaping device body of a three-dimensional additive manufacturing device according to an embodiment of the present invention;
[Fig. 2] Fig. 2 is a schematic plan view illustrating the shaping device body of the three-dimensional additive manufacturing device according to the embodiment of the present invention;
[Fig. 3] Fig. 3 is a schematic plan view illustrating the shaping device body of the three-dimensional additive manufacturing device according to the embodiment of the present invention;
[Fig. 4] Fig. 4 is a sectional view illustrating an essential part of a powder supply unit of the three-dimensional additive manufacturing device according to the embodiment of the present invention;
[Fig. 5] Fig. 5 is a sectional view illustrating a vicinity of a cartridge storage of the three-dimensional additive manufacturing device according to the embodiment of the present invention;
[Fig. 6] Fig. 6 is a block diagram illustrating a control system of the three-dimensional additive manufacturing device according to the embodiment of the present invention;
[Fig. 7] Fig. 7 is a block diagram illustrating a configuration example of a three-dimensional additive manufacturing system according to the embodiment of the present invention;
[Fig. 8] Fig. 8 is an explanatory view illustrating a configuration example of a metal shaping condition database according to the embodiment of the present invention;
[Fig. 9] Figs. 9A and 9B are perspective views illustrating a relation between a three-dimensional shape of a shaped object and a layer sectional shape according to the embodiment of the present invention. Fig. 9A illustrates a three-dimensional shape of the shaped object, and Fig. 9B illustrates the layer sectional shape of the shaped object;
[Fig. 10] Fig. 10 is an explanatory view illustrating a state in which an additive manufacturing portion scans an electron beam in order to shape the layer sectional shape of a first layer illustrated in Fig. 9B.
[Fig. 11] Fig. 11 is an explanatory view illustrating a configuration example of beam control data for laminating and shaping the shaped object illustrated in Fig. 10.
[Fig. 12] Fig. 12 is a flowchart illustrating an operation example of an entire three-dimensional additive manufacturing system according to the embodiment of the present invention.
[Fig. 13] Fig. 13 is a block diagram illustrating a configuration example of a prior-art additive manufacturing system.

### DESCRIPTION OF THE PREFERRED EMBODIMENTS

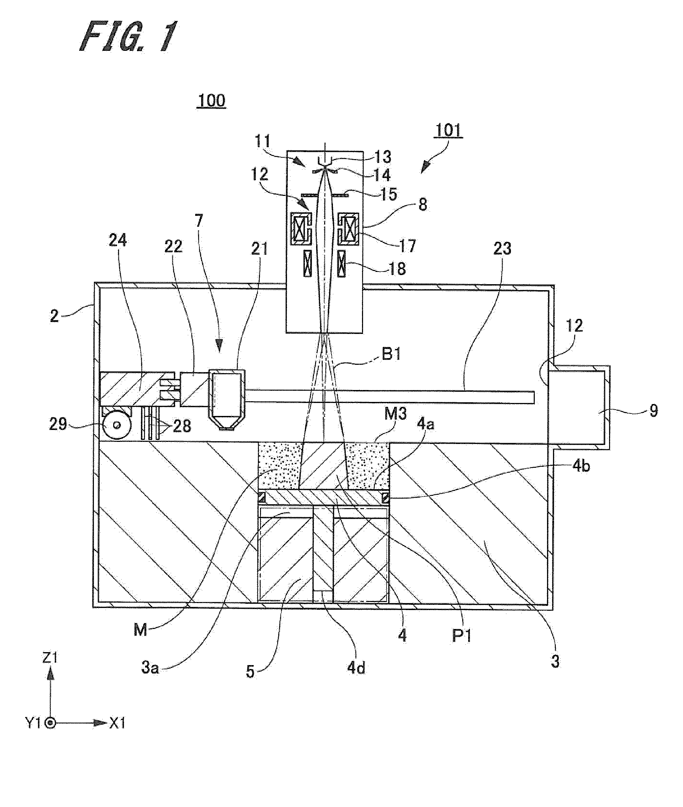

A three-dimensional additive manufacturing device according to an embodiment of the present invention will be desribed below by referring to Figs. 1 to 12. The same reference numerals are given to common members in each figure. Moreover, though explanation will be made in the following order, the present invention is not necessarily limited to the form below.

### <Configuration of three-dimensional additive manufacturing device>

First, a shaping device body in the embodiment of the three-dimensional additive manufacturing device of the present invention will be described by referring to Fig. 1.

Fig. 1 is an explanatory view schematically illustrating the shaping device body in the three-dimensional additive manufacturing device of this embodiment.

A three-dimensional additive manufacturing device 100 illustrated in Fig. 1 is a device for shaping a three-dimensional object by spreading a plurality of types of metal powder (powder samples) made of metal powder such as titanium, aluminum, and iron, for example, by irradiating the plurality of types of metal powder with an electron beam so as to melt the metal powder, and by laminating layers in which the metal powder is solidified.

The three-dimensional additive manufacturing device 100 includes the shaping device body 101. This shaping device body 101 has a hollow treatment chamber 2, a shaping frame 3, a flat plate-shaped stage 4, a stage driving mechanism 5, a powder supply unit 7, an electron gun 8, and a cartridge storage 9.

Here, a direction in parallel with one surface of the stage 4 is assumed to be a first direction X1, and a direction orthogonal to the first direction X1 and in parallel with the one surface of the stage 4 is assumed to be a second direction Y1. Moreover, a direction orthogonal to the one surface of the stage 4 is assumed to be a third direction Z1.

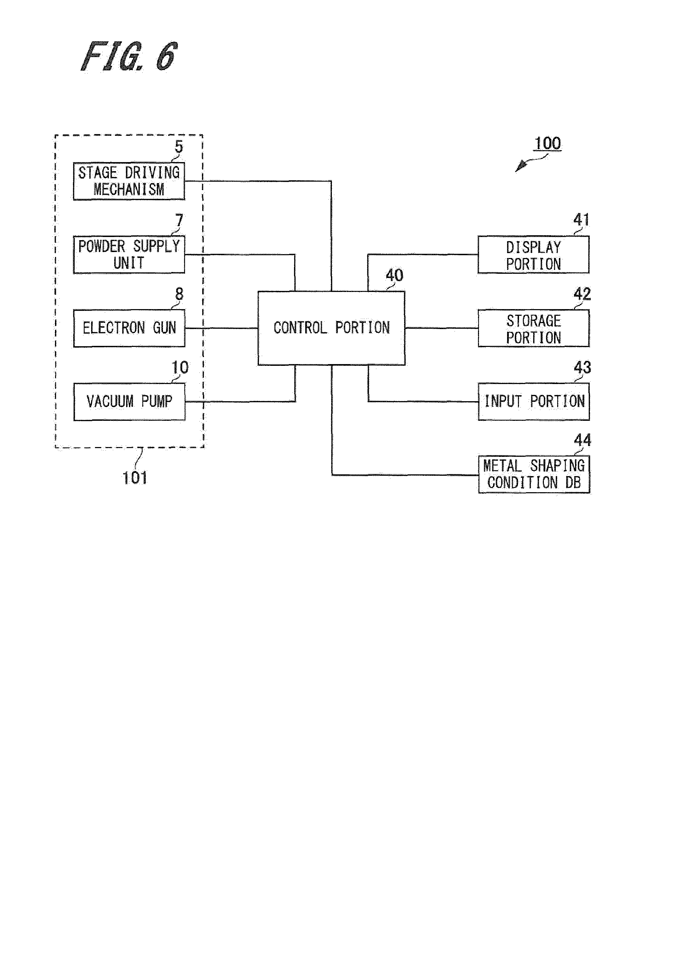

A vacuum pump 10 (see Fig. 6) is connected to the treatment chamber 2. An atmosphere in the treatment chamber 2 is discharged by the vacuum pump 10, and thereby an inside of the treatment chamber 2 is maintained vacuum. The shaping frame 3, the stage 4, the stage driving mechanism 5, and the powder supply unit 7 are provided in this treatment chamber 2. Moreover, the cartridge storage 9 is connected to one side of the treatment chamber 2 in the first direction X1. The electron gun 8 is attached to one side of the treatment chamber 2 in the third direction Z1, and the shaping frame 3 is arranged on the other side in the third direction Z1.

A pit 3a penetrating from one side to the other side along the third direction Z1 is formed in the shaping frame 3. The pit 3a is opened having a substantially quadrangular prism shape. Moreover, a part of an outer peripheral surface of the pit 3a in the shaping frame 3 is left open so that a completed shaped object P1 can be taken out.

The stage 4 and the stage driving mechanism 5 are arranged in the pit 3a in the shaping frame 3. The stage 4 is a powder table on which metal powder (powder samples) M are laminated. In this embodiment, since the shaped object P1 is constructed by using a plurality of types of the metal powder, the plurality of types of the powder sample M are spread on the stage 4.

A seal member 4b having heat resistance and flexibility is provided in a side end portion of the stage 4. The seal member 4b is brought into slidable contact with a wall surface of the pit 3a. One space and the other space on the stage 4 in the third direction Z1 are formed by the seal member 4b as sealed spaces, respectively.

Moreover, a shaft portion 4d is provided on the other surface on a side opposite to the one surface on which the plurality of types of metal powder M is laminated on the stage 4. The shaft portion 4d protrudes from the other surface of the stage 4 toward the other side of the third direction Z1. The shaft portion 4d is connected to the stage driving mechanism 5 accommodated in the pit 3a. The stage driving mechanism 5 drives the stage 4 along the third direction Z1 through the shaft portion 4d. A rack and pinion, a ball screw and the like can be cited, for example, as the stage driving mechanism 5.

The electron gun 8 is arranged on one side in the third direction Z1 of the treatment chamber 2 and opposite to one surface 4a of the stage 4. This electron gun 8 illustrates a specific example of the beam irradiation portion according to the present invention. The electron gun 8 has a beam emitting portion 11 and an electron optical system 12 which scans the plurality of types of metal powder M by an electron beam B1 focused to a predetermined beam diameter. The beam emitting portion 11 includes a cathode 13, a Wehnelt electrode 14, and an anode 15 and emits the electron beam B1 toward the stage 4.

The electron optical system 12 includes a lens 17 and a deflector 18.

The lens 17 further collects the electron beam B1 emitted from the beam emitting portion 11 by an electromagnetic action and focuses the electron beam B1 on the stage 4. The deflector 18 scans the electron beam B1 having passed through the lens 17 at a predetermined position on the stage 4.

The electron gun 8 constituted as above emits the electron beam B1 to the plurality of types of metal powder M in accordance with a two-dimensional shape obtained by slicing a shaped object (shaped object expressed by three-dimensional CAD (Computer-Aided Design) data) in design prepared in advance at ΔZ intervals. The plurality of types of metal powder M in a region corresponding to the two-dimensional shape is molten by the electron beam B1 emitted from the electron gun 8.

Moreover, the powder supply unit 7 is arranged at a predetermined interval on one side in the third direction Z1 from the shaping frame 3. Subsequently, a detailed configuration of the powder supply unit 7 will be described by referring to Figs. 1 to 5.

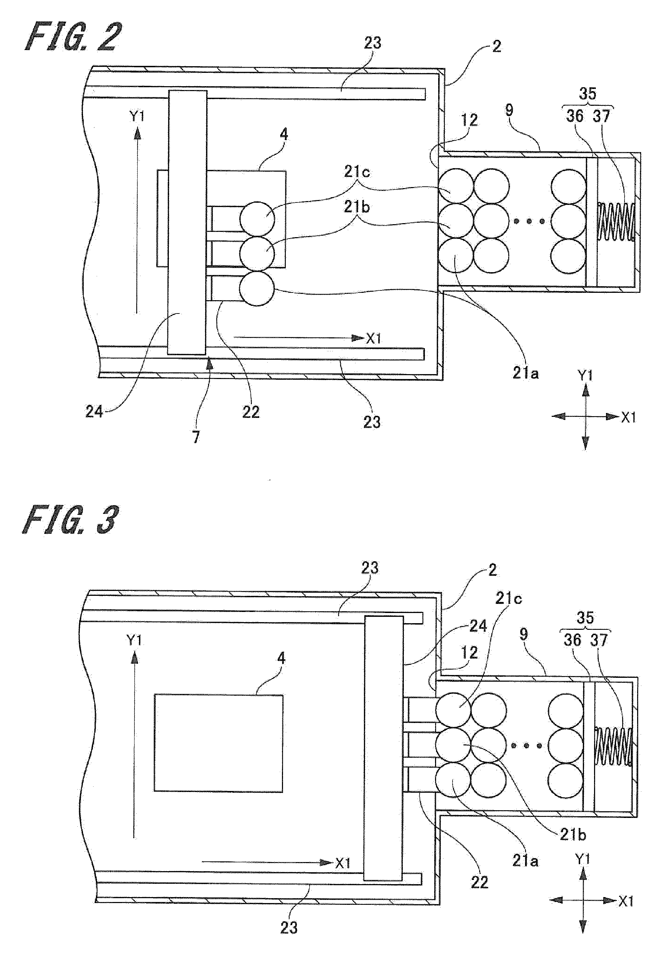

Figs. 2 and 3 are schematic plan views illustrating the shaping device body 101.

As illustrated in Figs. 2 and 3, the powder supply unit 7 has powder cartridges 21a, 21b, and 21c, a holding mechanism 22, a pair of first guide portions 23, and a second guide portion 24. The pair of first guide portions 23 and the second guide portion 24 constitute an example of the moving mechanism.

The pair of first guide portions 23 are arranged on both sides in the second direction Y1 by sandwiching the stage 4 between them. Moreover, the pair of first guide portions 23 extend into the treatment chamber 2 along the first direction X1. The second guide portion 24 is supported movably in the first direction X1 on the pair of first guide portions 23.

The second guide portion 24 extends along the second direction Y1 between the pair of first guide portions 23. The three holding mechanisms 22 are supported movably in the second direction Y1 On the second guide portion 24. The powder cartridges 21a, 21b, and 21c are detachably held on the three holding mechanisms 22, respectively. These powder cartridges 21a, 21b, and 21c accommodate different types of metal powder, respectively. The powder cartridges 21a, 21b, and 21c illustrate a specific example of the powder accommodating portion according to the present invention.

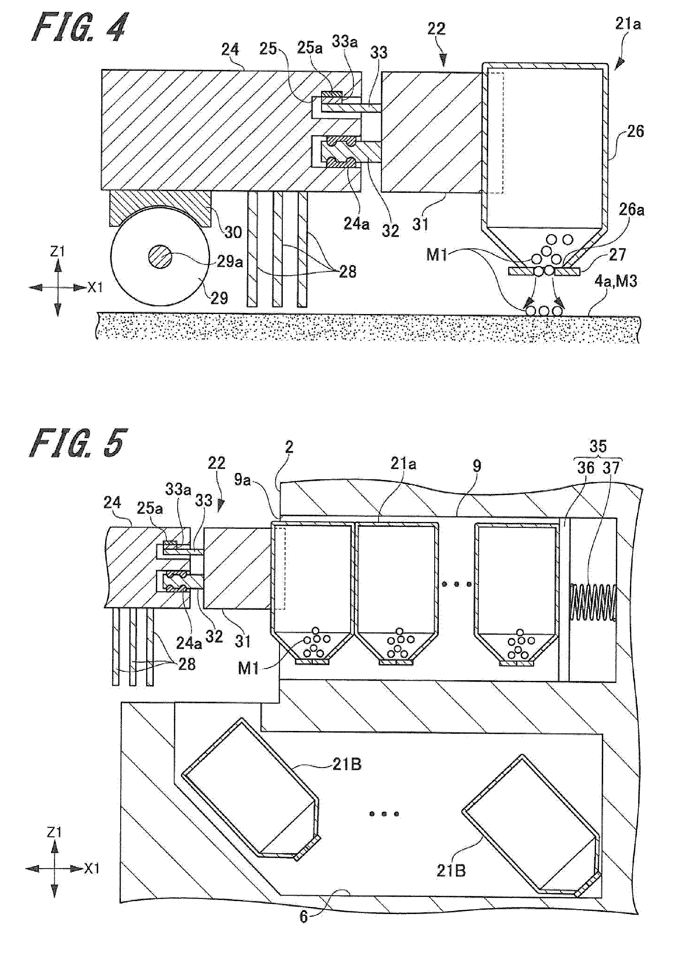

Fig. 4 is a sectional view illustrating an essential part of the powder supply unit 7.

The powder cartridges 21b and 21c (see Figs. 2 and 3) have the configurations similar to that of the powder cartridge 21a and a different point is only the type of the metal powder to be accommodated. Thus, the powder cartridge 21a is used as an example, here, and its configuration will be described.

As illustrated in Fig. 4, the powder cartridge 21a has a hollow container body 26. Metal powder M1 to be spread on the stage 4 is accommodated in the container body 26 of the powder cartridge 21a. An amount of the metal powder M1 accommodated in the container body 26 is an amount corresponding to one or plural layers to be spread on the stage 4, for example.

Moreover, a discharge port 26a for discharging the metal powder M1 toward the stage 4 is provided in the container body 26. Moreover, the powder cartridge 21a has a shutter member 27 covering the discharge port 26a of the container body 26 capable of opening/closing.

The holding mechanism 22 has a holding portion 31 for detachably holding the powder cartridge 21a (21b, 21c), a rail engagement portion 32 for slidable engagement with a guide rail 24a provided on the second guide portion 24, and a terminal connection portion 33. A cartridge-side terminal 33a to be electrically connected to the shutter member 27 of the powder cartridge 21a (21b, 21c) is provided on the terminal connection portion 33. The terminal connecting portion 33 is inserted into a terminal receiving portion 25 provided in the second guide portion 24. A guide-side terminal 25a is provided on the terminal receiving portion 25. The guide-side terminal 25a is electrically connected to the cartridge-side terminal 33a provided on the terminal connection portion 33.

Moreover, leveling members 28, a roller 29, and a heater 30 are provided on the second guide portion 24. The leveling members 28 are arranged at predetermined intervals from the second guide portion 24 to the one surface 4a of the stage 4 or from a plane (hereinafter referred to as a "sample surface") formed by the metal powder M spread on the stage 4 along the third direction Z1. Moreover, the leveling members 48 are provided in the rear of a moving direction of the second guide portion 24 when the powder supply unit 7 supplies the plurality of types of metal powder M toward the one surface 4a of the stage 4.

The leveling members 28 break a mountain of the metal powder M discharged from the powder cartridge 21 and level the discharged metal powder M on the one surface 4a of the stage 4 or on the sample surface M3 so as to have a substantially uniform thickness. As a result, the metal powder M can be disposed orderly having a predetermined thickness on the one surface 4a of the stage 4 or the sample surface M3.

The roller 29 is rotatably supported by a roller support member, not shown, and the roller support member is urged to the sample surface M3 side by an urging member, not shown. As a result, the roller 29 is brought into contact with the sample surface M3, and the sample surface M3 is compressed. As a result, the thickness of the spread metal powder M can be made uniform.

The heater 30 is opposed close to a surface of the roller 29 and heats the surface of the roller 29. Since the roller 29 warmed by the heater 30 is brought into contact with the sample surface M3, the metal powder M spread on the one surface 4a of the stage 4 can be pre-heated.

In this embodiment, the example in which the three powder cartridges 21a, 21b, and 21c and the holding mechanism 22 are provided on the second guide portion 24 is described, but the numbers of the powder cartridges and the holding mechanisms are not limited to three but two or four or more of them may be provided. That is, the types of the metal powder to be used may be two types or four types or more.

Moreover, the same type of metal powder M1 may be accommodated in the container bodies 26 of the two powder cartridges 21a and 21b and the type of the metal powder different from the metal powder M1 may be accommodated in the container body 26 of the powder cartridge 21c. As described above, it is only necessary that the metal powder to be accommodated in the plurality of powder cartridges is at least in two types, and the number of powder cartridges for accommodation may be changed in accordance with a use frequency.

Fig. 5 is a sectional view illustrating a vicinity of the cartridge storage 9.

As illustrated in Fig. 5, a plurality of new powder cartridges 21a filled with the metal powder M1 is stored in the cartridge storage 9. Pluralities of the new cartridges 21b and 21c filled with the metal powder of a type different from that of the metal powder M1 are stored in the cartridge storage 9 (see Figs. 2 and 3).

A replacement window 9a for discharging the powder cartridge 21a (21b, 21c) is formed on the treatment chamber 2 side in the cartridge storage 9. Moreover, a pushing-out mechanism 35 is provided on a side opposite to the replacement window 9a in the cartridge storage 9.

The pushing-out mechanism 35 includes a pushing-out plate 36 brought into contact with the powder cartridge 21a (21b, 21c) and a coil spring 37 urging the pushing-out plate 36 to the replacement window 9a side. The pushing-out mechanism 35 urges the stored powder cartridge 21a (21b, 21c) to the replacement window 9a side.

Moreover, a stopper, not shown, is provided at the replacement window 9a in the cartridge storage 9. The stopper is brought into contact with the powder cartridge 21a (21b, 21c) urged by the pushing-out mechanism 35 and regulates it so that the powder cartridge 21a (21b, 21c) is not pushed out of the cartridge storage 9. Moreover, when the powder cartridge 21a (21b, 21c) is to be replaced, the stopper is removed from the powder cartridge 21a (21b, 21c), and the one powder cartridge 21a (21b, 21c) is transferred to the holding mechanism 22.

The pushing-out mechanism 35 is not limited to the above-described pushing-out plate 36 and the coil spring 37 but other various mechanisms such as a motor, a piston, and a high-pressure gas may be used.

Moreover, a cartridge recovery storage 6 is provided on the other side of the third direction Z1 of the cartridge storage 9. A used powder cartridge 21B which has discharged all the metal powder is discharged to the cartridge recovery storage 6.

By newly filling the used powder cartridge 21B recovered in the cartridge recovery storage 6 with new metal powder, it is possible to re-use the used powder cartridge 21B. Moreover, the metal powder remaining in the used powder cartridge 21B can be also re-used.

### <Operation of shaping device body>

Subsequently, an operation of the three-dimensional additive manufacturing device 100 having the above-described configuration will be described by referring to Figs. 1 to 5.

In order to construct the shaped object P1, first, as illustrated in Fig. 1, the stage 4 is arranged by the stage driving mechanism 5 at a position lowered in the third direction Z1 from the upper surface of the shaping frame 3 by a ΔZ portion. This ΔZ portion corresponds to a layer thickness in the third direction Z1 of the plurality of types of metal powder M spread after that.

Subsequently, the plurality of types of metal powder M is spread by the powder supply unit 7 on the one surface of the stage 4 until a thickness ΔZ is reached. Specifically, as illustrated in Fig. 2, the holding mechanism 22 and the powder cartridges 21a, 21b, and 21c are moved upward along the first guide portion 23 and the second guide portion 24 to where the metal powder M1 is to be spread on the stage 4. Then, as illustrated in Fig. 4, the shutter member 27 of the powder cartridge 21a is opened. As a result, the metal powder M1 accommodated in the powder cartridge 21a is discharged, and the metal powder M1 is supplied to a desired position on the one surface 4a of the stage 4 from the discharge port 26a.

After that, the holding mechanism 22 and the powder cartridges 21a, 21b, and 21c are moved upward along the first guide portion 23 and the second guide portion 24 to where the metal powder different from the metal powder M1 on the stage 4 is to be spread. Then, the shutter member 27 of the powder cartridge 21b is opened. As a result, the metal powder different from the metal powder M1 accommodated in the powder cartridge 21b is discharged, and the metal powder different from the metal powder M1 is supplied to a desired position on the one surface 4a of the stage 4 from the discharge port 26a.

Since description on supply of the metal powder different from the metal powder M1 accommodated in the powder cartridge 21c to a desired position on the one surface 4a of the stage 4 is overlapped with the description regarding the above-described powder cartridge 21b, it is omitted.

Subsequently, as illustrated in Fig. 1, the electron beam B1 is emitted from the electron gun 8 to the plurality of types of metal powder M. The electron gun 8 emits the electron beam B1 to the metal powder M1 in accordance with a two-dimensional shape obtained by slicing a shaped object (shaped object expressed by three-dimensional CAD (Computer-Aided Design) data) in design prepared in advance at ΔZ intervals. The plurality of types of metal powder M in a region corresponding to the two-dimensional shape is molten by the electron beam B1 emitted from the electron gun 8.

Subsequently, the plurality of types of molten metal powder M is solidified after predetermined time according to a material elapses. After the plurality of types of metal powder M for one layer is molten and solidified, the stage 4 is lowered by the ΔZ portion by the stage driving mechanism 5. This movement of the stage 4 in the third direction Z1 is realized by sliding of the seal member 4b on an inner surface of the pit 3a of the shaping frame 3.

Subsequently, the powder cartridges 21a, 21b, and 21c are moved upward to where the metal powder M1 is to be spread on the stage 4 by the powder supply unit 7 again and the ΔZ portion of the metal powder M1 is spread on a layer (lower layer) having been spread immediately before. Similarly to this, the metal powder different from the metal powder M1 is also spread on the layer (lower layer) having been spread immediately before.

Subsequently, the plurality of types of metal powder M in the region corresponding to the two-dimensional shape corresponding to that layer is molten and solidified by the electron beam B1 emitted from the electron gun 8. By repeating the series of processing so as to laminate the layers of the plurality of types of molten and solidified metal powder M, the shaped object P1 is constructed. As a result, the operation of the three-dimensional additive manufacturing device 100 of this embodiment is completed.

Here, the used powder cartridge 21B having discharged all the accommodated metal powder is conveyed to the cartridge storage 9 and the cartridge recovery storage 6 as illustrated in Figs. 3 and 5. Then, the used powder cartridge 21B is removed from the holding mechanism 22, and the used powder cartridge 21B is recovered in the cartridge recovery storage 6.

Subsequently, the holding mechanism 22 enters into the cartridge storage 9 through the replacement window 9a of the cartridge storage 9 and holds the new powder cartridge 21a (21b, 21c). When the powder cartridge 21a (21b, 21c) is transferred from the cartridge storage 9 to the holding mechanism 22, the remaining powder cartridge 21a (21b, 21c) stored in the cartridge storage 9 is urged by the pushing-out mechanism 35 toward the replacement window 9a. As a result, the powder cartridge 21a (21b, 21c) to be subsequently held by the holding mechanism 22 stands by at a receiving position in the cartridge storage 9.

According to the three-dimensional additive manufacturing device 100 of this embodiment, the plurality of types of metal powder M to form the shaped object P1 is divided into a portion for one layer or plurality of layers and accommodated in the plurality of powder cartridges 21a, 21b, and 21c. As a result, the plurality of types of metal powder M can be spread in a desired region on the one surface 4a of the stage 4, respectively. That is, the plurality of types of metal powder M can be arranged on the same layer.

Moreover, since the plurality of types of metal power M is accommodated in the container bodies 26 of the powder cartridges 21a, 21b, and 21c, respectively, staining on the inside of the treatment chamber 2 by the plurality of types of metal powder M can be suppressed.

Moreover, the plurality of types of metal powder M required for shaping the shaped object P1 can be managed by being divided into small amounts for each of the plurality of powder cartridges 21a, 21b, and 21c. Storage and management of the plurality of types of metal powder M can be facilitated. Furthermore, the plurality of types of metal powder M can be prevented from being wasted.

### <Control system of three-dimensional additive manufacturing device>

Subsequently, a control system of the three-dimensional additive manufacturing device 100 will be described by referring to Fig. 6.

Fig. 6 is a block diagram illustrating the control system of the three-dimensional additive manufacturing device of this embodiment.

The three-dimensional additive manufacturing device 100 includes the above-described shaping device body 101, a control portion 40 for controlling each system, a display portion 41 for displaying a beam current value and the like of the electron beam B1, a storage portion 42 for storing a control program and the like, an input portion 43 for giving an instruction to the control portion 40, and a metal shaping condition database (DB) 44. The metal shaping condition database 44 illustrates a specific example of the metal shaping condition storage portion according to the present invention.

As described above, the shaping device body 101 includes the stage driving mechanism 5, the powder supply unit 7, the electron gun 8, and the vacuum pump 10. The control portion 40 reads out a control program stored in the storage portion 42 and controls processing and an operation of each of the stage driving mechanism 5, the powder supply unit 7, the electron gun 8, the vacuum pump 10 and the like in accordance with this control program.

### <Configuration of three-dimensional additive manufacturing system>

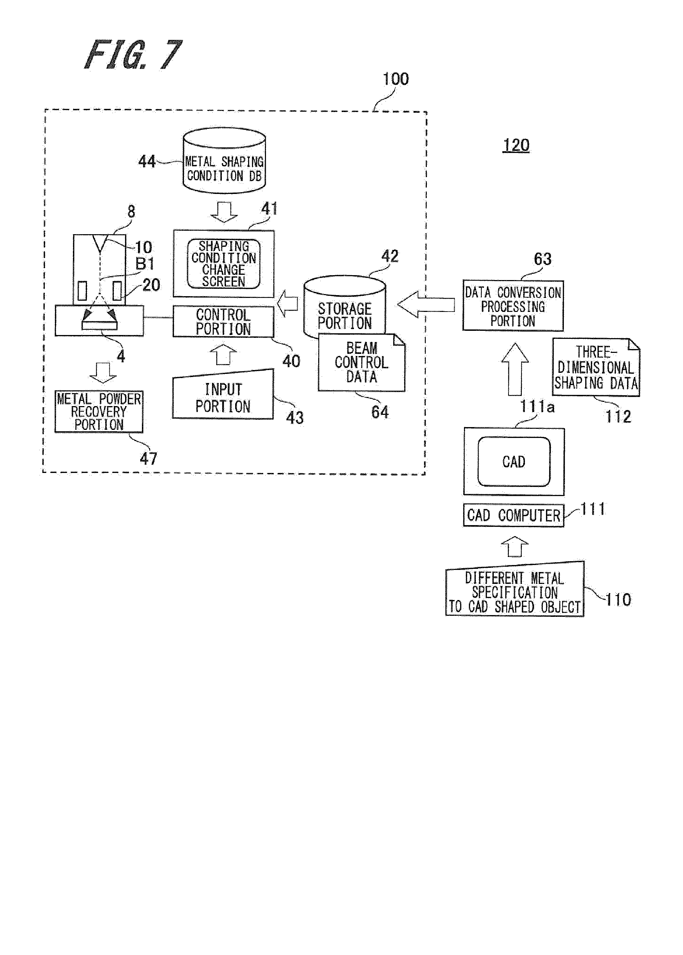

Subsequently, an entire system configuration including the three-dimensional additive manufacturing device 100 will be described by referring to Fig. 7.

Fig. 7 is a block diagram illustrating a configuration example of the three-dimensional additive manufacturing system.

A three-dimensional additive manufacturing system 120 includes the three-dimensional additive manufacturing device 100, a CAD computer 111, and a data conversion processing portion 63. The three-dimensional additive manufacturing device 100 has a metal powder recovery portion 47. The metal powder recovery portion 47 recovers, for each type, the plurality of types of metal powder which is no longer required after supply of the plurality of types of metal powder onto the stage 4 or after additive manufacturing.

The CAD computer 111 displays a shape of a shaped object designed by the CAD on a display portion 111a and outputs three-dimensional shaping data 212. A format of the three-dimensional shaping data 212 is a general CAD format.

Moreover, a type of metal (material) to construct the designed shaped object and a portion to be constructed by the metal are inputted into the CAD computer 111. That is, the user inputs the plurality of types of metal for constructing the designed shaped object and also inputs the portion to be constructed by each metal in the designed shaped object. The CAD computer 111 adds the plurality of types of metal for constructing the shaped object and information on the portion to be constructed by each metal in the designed shaped object to the three-dimensional shaping data 212. Therefore, the CAD computer 111 illustrates a specific example of a metal powder specifying portion according to the present invention.

The data conversion processing portion 63 converts the three-dimensional shaping data 112 to beam control data 64 for controlling the electron beam B1 for each specific region and has this beam control data 64 stored in the storage portion 42.

The beam control data 64 is data for shaping a layer sectional shape of an n layer obtained by slicing the three-dimensional shaping data 212 by a predetermined laminate thickness and indicates a plurality of types of metal and a coordinate value of a portion to be constructed by each metal. A data format of this beam control data 64 is a beam control data format used in the three-dimensional additive manufacturing device 100.

The beam control data format specifies a metal type number indicating metal to be used, a scan start position, and a scan end position for each specific region to be scanned by the electron beam B1. A shaping condition in the specific region (a part of one layer, for example) is determined by the metal type number stored in this beam control data format.

The control portion 40 transfers the beam control data read out for each layer from the storage portion 42 to the shaping device body 101 and causes the shaping device body 101 to perform additive manufacturing. The user can perform external input such as a partial change of the shaping condition by using the input portion 43. Moreover, even while the shaping device body 101 is performing additive manufacturing, the shaping condition can be changed. However, this change processing is executed for the supplementary purpose and is not indispensable.

The control portion 40 controls the powder supply unit 7 on the basis of the beam control data 64 and spreads the plurality of types of metal powder M on the stage 4. Moreover, the control portion 40 reads out the shaping condition from the metal shaping condition database 44 on the basis of the metal type number stored in the beam control data 64. Then, it changes the condition of the electron gun 8 in accordance with the read-out shaping condition and scans the metal powder corresponding to the read-out shaping condition by the electron beam B1. As a result, the plurality of types of metal powder M is molten and solidified at each layer, and additive manufacturing of the shaped object P1 is performed.

### <Configuration of metal shaping condition database>

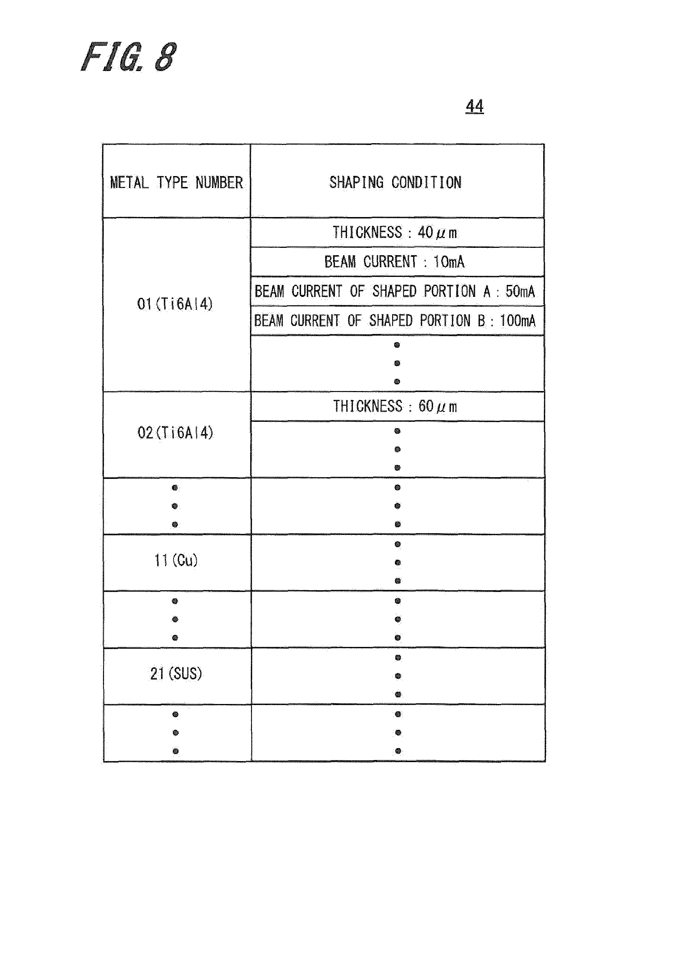

Subsequently, a configuration example of the metal shaping condition database 44 will be described by referring to Fig. 8.

Fig. 8 illustrates a configuration example of the metal shaping condition database 44.

The metal shaping condition database 44 includes a metal type number field and a shaping condition field. The metal type number field stores metal type numbers in an ascending order such as "01", "02", ... "11". The shaping condition field stores shaping conditions associated with the metal type number field. The metal type numbers and the shaping conditions are in a one-to-many relation.

For example, when the metal type number is "01", a shaping condition when the metal powder of titanium aluminum alloy (Ti6A14, for example) having a laminate thickness of 40 µm is processed for additive manufacturing is stored in the metal shaping condition database 44. The shaping condition includes shaping parameters such as the laminate thickness of the metal powder, a beam current of the electron beam B1, a beam current of a shaped portion A, a beam current of a shaped portion B and the like. Moreover, the shaping condition includes shaping parameters, not shown, such as an acceleration voltage, a beam diameter of the electron beam B1, a scanning speed, a pitch of the electron beam B1 and the like. That is, the shaping condition is an output condition of the electron beam B1.

Similarly, when the metal type number is "02", a shaping condition when the metal powder of titanium aluminum alloy having a laminate thickness of 60 µm is processed for shaping is stored in the metal shaping condition database 44. If the metal type number is "11", a shaping condition when the metal powder is copper is stored in the metal shaping condition database 44, and when the metal type number is "21", a shaping condition when the metal powder is SUS (stainless steel) is stored therein. The shaping conditions when the metal type numbers are "02", "11", and "21" are not shown.

### <Relation between three-dimensional shape and layer sectional shape>

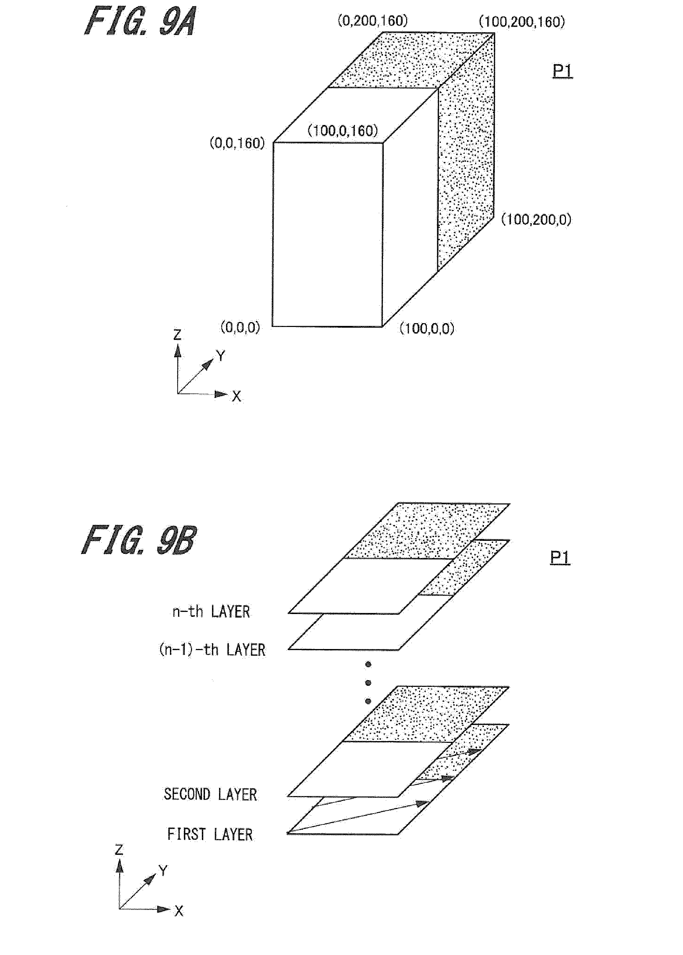

Subsequently, a relation between a shaped object expressed by the three-dimensional shaping data 212 and the beam control data 64 will be described by referring to Figs. 9A and 9B.

Figs. 9A and 9B illustrate a relation between a three-dimensional shape and a layer sectional shape of the shaped object P1. Fig. 9A illustrates a three-dimensional shape of the shaped object P1, and Fig. 9B illustrates a layer sectional shape of the shaped object P1.

Fig. 9A illustrates the three-dimensional shape of the shaped object P1 expressed by the three-dimensional shaping data 212. This shaped object P1 is constructed by laminating and shaping the metal powder from first to n-th layers and it is known that the shaped object P1 is a cuboid with 100 mm in the

X-direction, 200 mm in the Y-direction, and 160 mm in the Z-direction. In the shaped object P1, two specific regions are set in an in-plane direction. A first specific region from 0 to 100 mm in the Y-direction for each layer is laminated and shaped by a titanium aluminum alloy, and a second specific region from 100 to 200 mm in the Y-direction of the same layer has its layer sectional shape shaped by copper.

Fig. 9B illustrates the layer sectional shape of the shaped object P1 obtained by slicing the three-dimensional shape of the shaped object P1 illustrated in Fig. 9A into n layers (n is an integer) by a predetermined laminate thickness (40 µm, for example) in the horizontal direction. Here, an arrow displayed by overlapping the first layer sectional shape indicates a scanning direction in each session when the electron beam B1 is scanned three times.

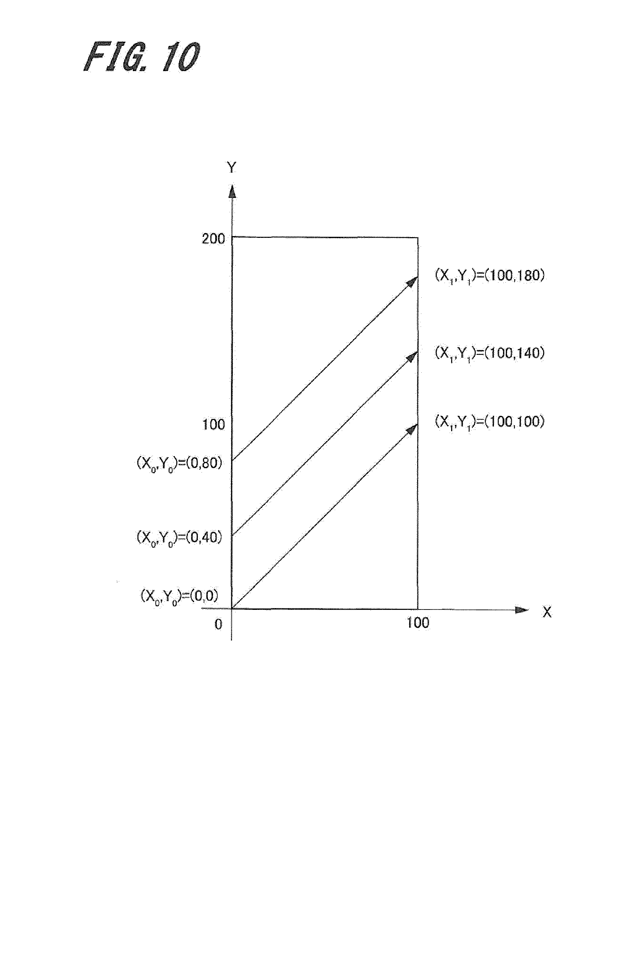

Fig. 10 illustrates a state in which the shaping device body 101 scans the electron beam B1 for shaping the first layer sectional shape illustrated in Fig. 9B. The scanning state of the electron beam B1 illustrated in Fig. 10 is simplified for explanation and in actuality, a profile portion of the layer sectional shape might be scanned first or a profile inside of the layer sectional shape might be scanned at random.

Scanning in each session of the electron beam B1 is specified by the scan start position and the end position, and plural sessions of scanning are performed at a constant pitch. Here, (X₀, Y₀) is assumed to be the scan start position, and (X₁, Y₁) is assumed to be the scan end position. In this case, the shaping device body 101 performs a first session of scanning of the electron beam B1 from (X₀, Y₀) = (0, 0) to (X₁, Y₁) = (100, 100). Moreover, the shaping device body 101 performs a second session of scanning of the electron beam B1 from (X₀, Y₀) = (0, 40) to (X₁, Y₁) = (100, 140). Then, the shaping device body 101 performs a third session of scanning of the electron beam B1 from (X₀, Y₀) = (0, 80) to (X₁, Y₀) = (100, 180).

### <Configuration of beam control data>

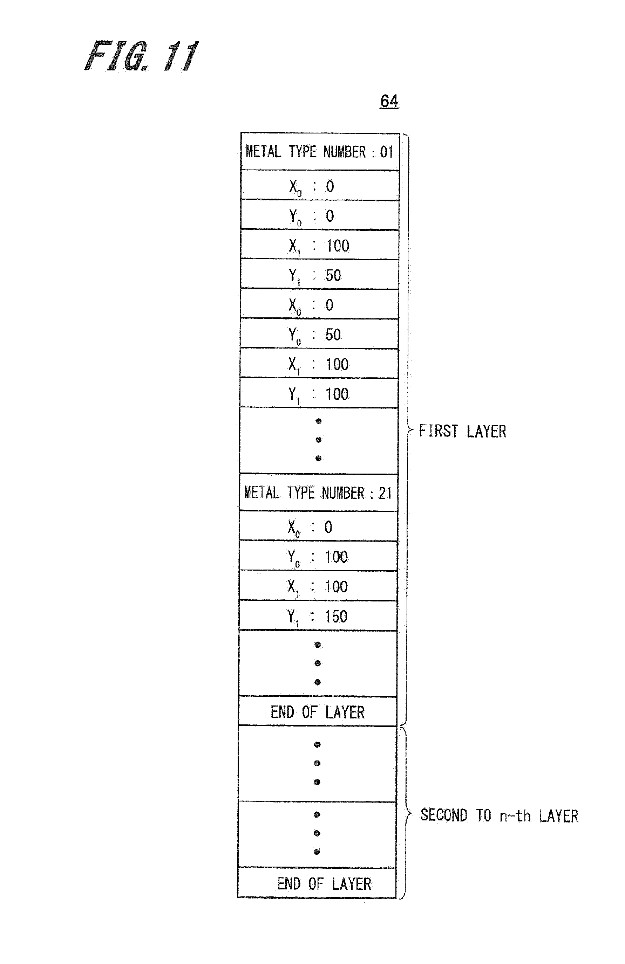

Subsequently, a configuration of the beam control data corresponding to the shaped object P1 illustrated in Fig. 9A will be described by referring to Fig. 11.

Fig. 11 is an explanatory view illustrating a configuration example of the beam control data 64.

As illustrated in Fig. 11, the beam control data 64 stores the metal type number, the scan start position, and the scan end position, and a code indicating an end of a layer (in the following explanation, it will be denoted as an "end of layer") repeatedly for each layer.

Paying attention to the first layer of the beam control data 64, "01" is stored as the metal type number in a first record. Each of coordinate values of (X₀, Y₀) and (X₁, Y₁) is repeatedly stored in the subsequent records and then, "21" is stored as the metal type number. Then, the "end of layer" is stored in the last record. A record group from the first record to the last record in which the "end of layer" is stored instructs that scanning of the electron beam B1 is performed under the shaping condition in which the first layer is associated with the metal type numbers "01" and "21".

For the second layer and after, too, the metal type number is stored in the first record, the record of (X₀, Y₀) and (X₁, Y₁) is repeatedly stored, and the "end of layer" is stored in the last record. Thus, the shaping device body 101 performs shaping under the shaping condition indicated by the metal type number in scanning of (X₀, Y₀) and (X₁, Y₁) stored in the record group of the record indicated by the metal type number and after.

As illustrated in Fig. 11, the two metal type numbers "01" and "21" are described in the record group for one layer. Thus, even if different types of metal powder M ("Ti6A14" and "SUS" in this example) are contained in one layer, the shaping device body 101 can scan the electron beam B1 by automatically changing the shaping condition and perform additive manufacturing.

### <Operation example of three-dimensional additive manufacturing system>

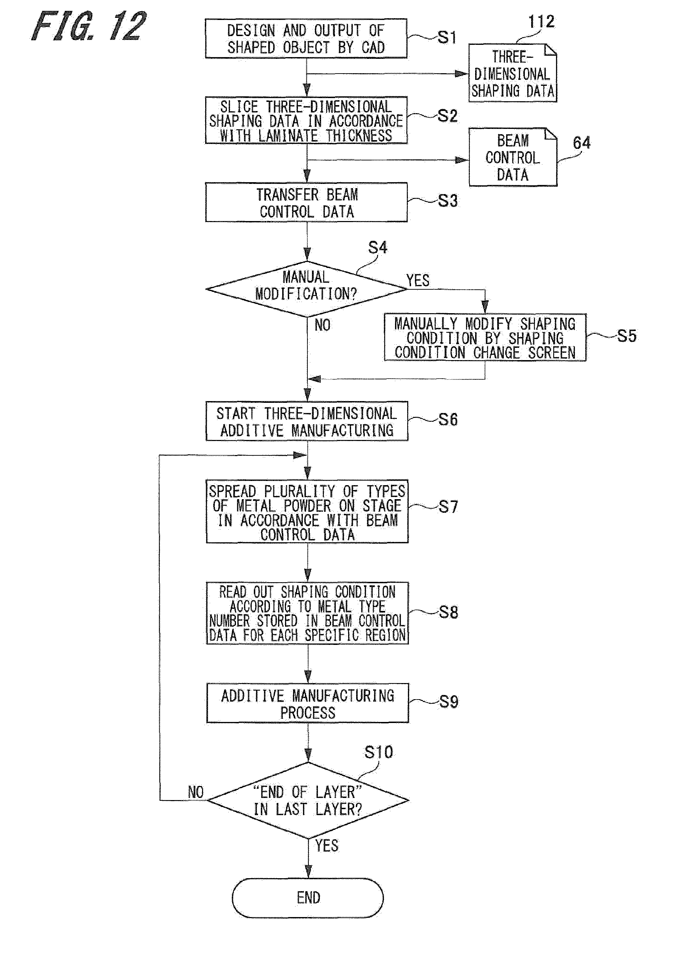

Subsequently, an operation example of the three-dimensional additive manufacturing system 120 will be described by referring to Fig. 12.

Fig. 12 is a flowchart illustrating an entire operation example of the three-dimensional additive manufacturing system 120.

First, the user operates the CAD computer 211 so as to design a targeted shaped object by the CAD. At this time, the user inputs a plurality of types of metal for constructing the designed shaped object and also inputs a portion to be constructed by each metal in the designed shaped object. Then, the CAD computer 211 outputs the three-dimensional shaping data 212 (S1).

Subsequently, the data conversion processing portion 213 slices the three-dimensional shaping data 212 in accordance with a predetermined laminate thickness and creates the beam control data 64 (S2). Subsequently, the data conversion processing portion 213 transfers the beam control data 64 to the storage portion 42 (S3). As a result, the beam control data 64 is stored in the storage portion 42.

Subsequently, the control portion 40 has the shaping condition displayed on the shaping condition change screen of the display portion 41. The user determines whether or not the shaping condition needs to be modified while watching the shaping condition change screen (S4). If modification is needed, the user manually modifies the shaping condition by the input portion 43 (S5). This modified shaping condition is reflected in the shaping condition to be stored in the metal shaping condition database 44. For example, such a modification is made that the beam current value of the profile portion is raised from 50 mA to 70 mA.

After processing at Step S4 or S5, the control portion 40 starts additive manufacturing by the shaping device body 101 (S6). When the additive manufacturing by the shaping device body 101 is started, the control portion 40 determines a type of the metal powder to be supplied to the stage 4 and a region on which the metal powder is to be spread in accordance with the beam control data 64. Then, by controlling the powder supply unit 7, the plurality of types of metal powder is spread on the stage 4 (S7).

Subsequently, the control portion 40 reads out the shaping condition according to the metal type number stored in the beam control data 64 from the metal shaping condition database 44 for each specific region (S8). Then, in accordance with the read-out shaping condition, the control portion 40 controls the electron gun 8 so as to irradiate the target metal powder with the electron beam B1 having an appropriate output (beam current or the like), and additive manufacturing process by the shaping device body 101 is performed (S9).

Subsequently, the control portion 40 discriminates whether the additive manufacturing this time is the "end of layer" in the last layer or not (S10). If the control portion 40 discriminates that the additive manufacturing this time is not the "end of layer" in the last layer (NO), it moves the processing to Step S7.

On the other hand, at Step S10, if the control portion 40 discriminates that the additive manufacturing this time is the "end of layer" in the last layer (YES), it ends the additive manufacturing.

In the three-dimensional additive manufacturing system 120 according to the embodiment described above, the powder supply unit 7 includes the plurality of powder cartridges 21a, 21b, and 21c. The plurality of powder cartridges 21a, 21b, and 21c accommodates the plurality of types of metal powder M forming the shaped object P1. As a result, the plurality of types of metal powder M can be spread on a desired region on the one surface 4a of the stage 4, respectively. That is, the plurality of types of metal powder M can be arranged on the same layer.

Moreover, it is configured such that the control portion 40 reads out the shaping condition according to the metal type number stored in the beam control data 64 from the metal shaping condition database (DB) 44. Then, the control portion 40 controls the electron gun 8 so as to irradiate the target metal powder with the electron beam B1 having an appropriate output value in accordance with the read-out shaping condition. As a result, even if two types or more of the metal powder M are spread on one layer, each of the metal powder can be irradiated with the electron beam B1 having an appropriate output value and thus, the shaped object P can be constructed by using the plurality of types of metal powder.

Moreover, in this embodiment, it is configured such that the metal shaping condition database 44 storing the metal type number and the shaping condition associated with the metal type number is provided. When the additive manufacturing process is to be performed, the control portion 40 reads out the shaping condition according to the metal type number from the metal shaping condition database 44. As a result, the shaping condition can be easily obtained, and the control of changing the shaping condition can be facilitated.

Moreover, the user can change the shaping condition through the shaping condition change screen displayed on the display portion 41 before the additive manufacturing or during the additive manufacturing. Moreover, the user can also directly change extracted shaping condition data 65 to the shaping device body 101. Thus, in the actual additive manufacturing, modification for a more appropriate shaping condition can be made more easily.

Moreover, in prior arts, if there is an error in the beam control data 64, a work for re-creating the beam control data 64 becomes necessary. However, since the user can change the beam control data 64 with an error using the shaping condition change screen, the beam control data 64 does not have to be re-created.

The present invention is not limited to the above-described embodiment but it is needless to say that other various applications and variation are possible as long as the gist of the present invention described in claims is not deviated.

For example, the above-described embodiment explains configurations of a device and a system in detail and specifically for explaining the present invention to be understood easily and it is not limited to provision of all the described configurations. Moreover, a part of the configuration of an embodiment can be replaced with a configuration of another embodiment or moreover, the configuration of another embodiment can be also added to the configuration of the embodiment. Moreover, addition, deletion, and replacement of another configuration can be made for a part of the configuration of each embodiment.

Moreover, a control line and an information line are illustrated in only those considered to be necessary for explanation, and not necessarily all the control lines and information lines for a product are illustrated. Actually, it may be so considered that almost all the configurations are connected to each other.

In this embodiment, it is configured that the control portion 40 reads out the shaping condition according to the metal type number stored in the beam control data 64 from the metal shaping condition database 44. However, as the three-dimensional additive manufacturing device and the three-dimensional additive manufacturing method of the present invention, it may be so configured that the control portion 40 reads out a calculation program stored in the storage portion 42 and calculates a shaping condition according to the metal type number, for example.

In this embodiment, the powder supply unit 7 is configured to include the plurality of powder cartridges 21a, 21b, and 21c. However, the powder supply unit according to the present invention may be any as long as it is a mechanism for supplying a plurality of types of metal powder from an outside.

Such a mechanism can include the one provided with a plurality of powder accommodating portions, a plurality of powder storage portions, and a tube, for example. The plurality of powder accommodating portions accommodates a plurality of types of metal powder and discharges the plurality of types of metal powder onto the stage. The plurality of powder storage portions stores the plurality of types of metal powder. The tube has one end made to communicate with the plurality of powder accommodating portions and the other end made to communicate with the powder storage portion, and the plurality of types of metal powder stored in the plurality of powder storage portions is fed to the plurality of powder accommodating portions as appropriate.

Moreover, the metal type number is used as data for discriminating the type of metal in this embodiment. However, the data for discriminating the type of metal is not limited to numbers, but alphabets or symbols can be also used.

### (Explanation of Reference Numerals)

2; treatment chamber, 3; shaping frame, 3a; pit, 4; stage, 5; stage driving mechanism, 6; cartridge recovery storage, 7; powder supply unit, 8; electron gun, 9; cartridge storage, 9a; replacement window, 10; vacuum pump, 21a, 21b, 21c; powder cartridge (powder accommodating portion), 22; holding mechanism, 40; control portion, 41; display portion, 42; storage portion, 43; input portion, 44; metal shaping condition database (metal shaping condition storage portion), 63; data conversion processing portion, 64; beam control data, 65; extracted shaping condition data, 100; three-dimensional additive manufacturing device, 101; shaping device body, 111; CAD computer, 111a; display portion, 112; three-dimensional shaping data, 120; three-dimensional additive shaping system

## Claims

1. A three-dimensional additive manufacturing device comprising:
a stage on which a plurality of types of metal powder for forming a shaped object is spread;
a powder supply unit having a plurality of powder accommodating portions accommodating the plurality of types of metal powder and discharging the plurality of types of metal powder to the stage and a holding mechanism for holding the plurality of powder accommodating portions and adapted to spread the plurality of types of metal powder on the stage;
a beam irradiation portion adapted to irradiate the plurality of types of metal powder spread on the stage with a charged particle beam;
a storage portion adapted to store beam control data storing the type of metal powder and a coordinate position irradiated with the charged particle beam for each specific region; and
a control portion adapted to control the powder supply unit so as to spread the plurality of types of metal powder on the stage and control the beam irradiation portion so as to emit the charged particle beam with an output according to each metal powder, on the basis of the beam control data read out from the storage portion.

2. The three-dimensional additive manufacturing device according to claim 1, wherein
the powder supply unit spreads different types of metal powder for each of the specific regions in an in-plane direction of the stage.

3. The three-dimensional additive manufacturing device according to claim 1 or 2, further comprising:
a metal shaping condition storage portion adapted to store a shaping condition specifying an output value of the charged particle beam for each type of the metal powder, wherein
the control portion reads out the shaping condition according to the type of the metal powder stored in the beam control data from the metal shaping condition storage portion and causes the beam irradiation portion to emit the charged particle beam with the output according to each metal powder.

4. The three-dimensional additive manufacturing device according to any one of claims 1 to 3, wherein
the holding mechanism in the powder supply unit detachably holds the plurality of powder accommodating portions.

5. A three-dimensional additive manufacturing system comprising:
a stage on which a plurality of types of metal powder for forming a shaped object is spread;
a powder supply unit having a plurality of powder accommodating portions accommodating the plurality of types of metal powder and discharging the plurality of types of metal powder to the stage and a holding mechanism for holding the plurality of powder accommodating portions and adapted to spread the plurality of types of metal powder on the stage;
a beam irradiation portion adapted to irradiate the plurality of types of metal powder spread on the stage with a charged particle beam;
a metal powder specifying portion adapted to add a type of metal powder constructing a desired spot in the shaped object to three-dimensional shaping data;
a data conversion processing portion adapted to slice the three-dimensional shaping data and convert it to beam control data storing the type of metal powder and a coordinate position irradiated with the charged particle beam for each specific region;
a storage portion adapted to store the beam control data;
and
a control portion adapted to control the powder supply unit so as to spread the plurality of types of metal powder on the stage and control the beam irradiation portion so as to emit the charged particle beam having an output according to each metal powder, on the basis of the beam control data read out from the storage portion.

6. A three-dimensional additive manufacturing method, comprising:
a metal powder supply step of controlling, by a control portion, a powder supply unit so as to spread a plurality of types of metal powder on a stage on the basis of beam control data storing a type of metal powder and a coordinate position irradiated with a charged particle beam for each specific region; and
a beam emitting step of controlling, by the control portion, a beam irradiating portion so as to emit the charged particle beam with an output according to each metal powder on the basis of the beam control data.
